**Europäisches Patentamt**

**European Patent Office**

**Office européen des brevets**

(19)

(11) Veröffentlichungsnummer: **0 119 649**
**B1**

(12)

# EUROPÄISCHE PATENTSCHRIFT

(45) Veröffentlichungstag der Patentschrift:
**01.06.88**

(21) Anmeldenummer: **84200292.5**

(22) Anmeldetag: **01.03.84**

(51) Int. Cl.⁴: **C 04 B 37/00**, **C 04 B 37/02**,
**B 23 K 35/28**

(54) Verfahren zum Verbinden von keramischen Bauteilen miteinander oder mit metallischen Bauteilen.

(30) Priorität: **04.03.83 DE 3307700**
**04.03.83 DE 3307702**

(43) Veröffentlichungstag der Anmeldung:
**26.09.84 Patentblatt 84/39**

(45) Bekanntmachung des Hinweises auf die Patenterteilung:
**01.06.88 Patentblatt 88/22**

(84) Benannte Vertragsstaaten:
**DE FR GB**

(56) Entgegenhaltungen:
**GB - A - 656 476**
**US - A - 3 540 957**

**CHEMICAL ABSTRACTS, Band 93, Nr. 26, 29. Dezember 1980, Seite 297, Zusammenfassung Nr. 244171t, Columbus, Ohio, US**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Liehr, Manfred, Strehlowweg 38,
D-2000 Hamburg 52 (DE)**
Erfinder: **Kobs, Rolf, Kastanienring 5, D-2082 Tornesch (DE)**
Erfinder: **Nolting, Wolfgang, Lomerstrasse 67,
D-2000 Hamburg 70 (DE)**
Erfinder: **Orlowski, Rainer, Dr., Rotdornweg 17,
D-2085 Quickborn (DE)**

(74) Vertreter: **Kupfermann, Fritz-Joachim, Dipl.-Ing. et al,
Philips Patentverwaltung GmbH
Wendenstrasse 35 Postfach 10 51 49,
D-2000 Hamburg 1 (DE)**

## Beschreibung

Die Erfindung bezieht sich auf ein Verfahren zum kraftschlüssigen und vakuumdichten Verbinden von Bauteilen aus Keramik mit keramischen Bauteilen oder mit metallischen Bauteilen mittels Thermokompression (T.C.) unter Verwendung eines vor dem Thermokompressionsvorgang zwischen die zu verbindenden Bauteile gebrachten Lötmaterials.

Aus der GB-A 656 476 ist eine hartlötbare und schweissbare Aluminiumlegierung bekannt, die Aluminium, Zink und Magnesium sowie geringe Mengen an Mangan, Chrom und Beryllium enthält. Hinweise auf eine Verwendung einer derartigen Legierung zum Verbinden von Keramikteilen untereinander oder mit Metallteilen sind in dieser Schrift nicht zu finden. Auch Thermokompressionsverbindungen sind nicht erwähnt.

In Chemical Abstracts, Band 93, Nr. 26, 1980, Abstract Nr. 244 177 ist eine Magnesium und Lithium enthaltende Aluminiumlegierung zum Hartlöten von Keramikteilen an Aluminium beschrieben. Die Legierung enthält kein Zink. Auch ist keine Metallkeramikverbindung mit Hilfe von Thermokompression erwähnt.

Aus der US-A 3 540 957 ist ein Verfahren zum Hartlöten von Keramikteilen bekannt, bei dem eine Zink enthaltende Aluminiumlegierung zur Anwendung kommt. Diese Legierung enthält jedoch kein Magnesium. Auch fehlen Hinweise auf eine Thermokompressionsverbindung.

Es ist bekannt, keramische Bauteile aus $Al_2O_3$ durch Thermokompression miteinander zu verbinden. Es ist ebenfalls bekannt, legierte Stähle, beispielsweise Edelstahl 1.4057, durch Hartlötungen und Thermokompression mit Bauteilen aus Aluminiumoxid zu verbinden. Die Thermokompression ist ein Verbindungsverfahren, welches gegenüber bekannten Lötverfahren ausserordentlich rasch vor sich geht und deshalb zeitsparend ist.

Bei einem bekannten Verfahren zum Verbinden von keramischen Bauteilen aus Aluminiumoxid wird bei der Thermokompression als Lötmaterial beispielsweise Reinaluminium eingesetzt. Das eingesetzte Reinaluminium hat einen Reinheitsgrad von 99,999%. Das Verbinden geht derart vor sich, dass die beiden Bauteile mit einem zwischengefügten Reinaluminiumdraht bei einer Materialverbindungstemperatur von ca. 450–550°C in einer Vakuum- oder Stickstoff-Wasserstoffatmosphäre zusammengeschlagen werden. Der Kompressionsdruck beträgt beispielsweise 20 N/mm².

In gleicher Weise kann z.B. Edelstahl 1.4057 mit keramischen Bauteilen aus Aluminiumoxid unter Verwendung eines Lötdrahtes aus Reinaluminium mit einem Reinheitsgrad von 99,999% durch Thermokompression verbunden werden.

Der Druck richtet sich nach der zu erwartenden Verbindungsfläche. Diese Verbindungsfläche entsteht durch die Ausbreitung des Verbindungsmaterials nach dem T.C.-Vorgang (Erfahrungswerte).

Es hat sich gezeigt, dass die mit Hilfe von Reinaluminium erstellten Verbindungen nicht ausreichend steif sind. Die Verbindung zeigt bleibende Verformung bei Zug- und Druckbelastung unterhalb der Sigma-0,2-Grenze, welches zu Vakuum-Undichtheiten führen kann. Somit ist Reinaluminium nicht anwendbar bei Konstruktionen, die Zug- oder Druckbelastungen (z.B. kapazitive Sensorsysteme) ausgesetzt sind.

Es ist Aufgabe der Erfindung, ein Verfahren zum Verbinden von keramischen Bauteilen z.B. aus $Al_2O_3$ miteinander und mit metallischen Bauteilen z.B. aus legierten Stählen zu schaffen, bei dem durch Thermokompression eine so steife und dichte Verbindung entsteht, dass die Thermokompression selbst fester ist als das keramische Aluminiumoxidmaterial.

Die gestellte Aufgabe ist erfindungsgemäss gelöst durch die Verwendung eines Lötmaterials aus einer Aluminium-Zink-Magnesium-Legierung mit 91,1–97,9 Gew.% Al, 1,6–5,3 Gew.% Zn und 0,5–3,6 Gew.% Mg.

Dieses Material ist kaltaushärtend, hat aber bei den Verarbeitungstemperaturen von ca. 500°C die gleiche plastische Verformbarkeit wie beispielsweise Al 99,999%. Bei einer bevorzugten Ausführungsform des Verfahrens besteht das Lötmaterial aus einer Legierung mit der Zusammensetzung 95 Gew.% Al, 4 Gew.% Zn und 1 Gew.% Mg.

Es hat sich herausgestellt, dass eine derartige Verbindung bei Zugbeanspruchung in der Naht nicht mehr lösbar ist, dass eher das Keramikmaterial als die Verbindung bei Belastungsproben Schaden leidet und bleibende Verformung in der Naht bei Druckbeanspruchung 250 N/mm² und Zugbeanspruchung bis zum Bruch nicht feststellbar sind. Die Verbindung ist einwandfrei vakuumdicht.

Das Verfahren kann z.B. bei der Herstellung von kapazitiven Sensoren verwendet werden.

## Patentansprüche

1. Verfahren zum kraftschlüssigen und vakuumdichten Verbinden von Bauteilen aus Keramik mit keramischen Bauteilen oder mit metallischen Bauteilen mittels Thermokompression unter Einsatz eines vor dem Thermokompressionsvorgang zwischen die zu verbindenden Bauteile gebrachten Lotmaterials, gekennzeichnet durch die Verwendung eines Lotmaterials aus einer Aluminium-Zink-Magnesium-Legierung mit 91,1–97,9 Gew.% Al, 1,6–5,3 Gew.% Zn und 0,5–3,6 Gew.% Mg.

2. Verfahren nach Anspruch 1, dadurch gekennzeichnet, dass eine Legierung aus 95 Gew.% Al, 4 Gew.% Zn und 1 Gew.% Mg verwendet wird.

3. Verfahren nach den Ansprüchen 1 und 2, dadurch gekennzeichnet, dass die Bauteile bei einer Temperatur von etwa 500°C durch Thermokompression miteinander verbunden werden.

## Claim

1. A method for the force-coupled and vacuum-tight bonding of ceramic components to one another or to metallic components by means of thermocompression by using a soldering material which is provided between the components to be bonded prior to the thermocompression process, characterized by the use of a soldering material of an aluminium-zinc-magnesium alloy having 91.1–97.9% by weight of Al, 1.6–5.3% by weight of Zn and 0.5–3.6% by weight of Mg.

2. A method as claimed in Claim 1, characterized in that an alloy is used of 95% by weight of Al, 4% by weight of Zn and 1% by weight of Mg.

3. A method as claimed in Claims 1 and 2, characterized in that the components are bonded together by thermocompression at a temperature of approximately 500°C.

## Revendications

1. Procédé permettant de relier, par force, et d'une façon étanche au vide, des composants céramiques entre eux ou à des composants métalliques par thermocompression à l'aide d'un matériau de soudage appliqué entre les composants à relier avant le procédé de thermocompression, caractérisé par l'utilisation de matériau de soudage en un alliage d'aluminium-zinc-magnésium contenant en poids 91,1%-97,9% de Al, 1,6-5,3% en poids de Zn et 0,5-3,6% en poids de Mg.

2. Procédé selon la revendication 1, caractérisé par l'utilisation d'un alliage contenant 95% en poids de Al, 4% en poids de Zn et 1% en poids de Mg.

3. Procédé selon la revendication 1 ou 2, caractérisé en ce que les composants sont liés entre eux à une température d'environ 500°C par thermocompression.